## Europäisches Patentamt
## European Patent Office
## Office européen des brevets

(19)

(11) Numéro de publication: **0 168 307**
**B1**

(12)

# FASCICULE DE BREVET EUROPÉEN

(45) Date de publication du fascicule du brevet:
**17.01.90**

(21) Numéro de dépôt: **85401224.2**

(22) Date de dépôt: **19.06.85**

(51) Int. Cl. 4: **G 06 F 11/00, G 06 F 11/30**

(54) Microprocesseur avec fonction d'arrpt du compteur d'évènements.

(30) Priorité: **29.06.84 FR 8410352**

(43) Date de publication de la demande:
**15.01.86 Bulletin 86/03**

(45) Mention de la délivrance du brevet:
**17.01.90 Bulletin 90/03**

(84) Etats contractants désignés:
**DE FR GB IT NL**

(56) Documents cité:
**EP-A-0 018 736**
**WO-A-82/03478**
**DE-A-2 715 750**
**US-A-3 226 684**
**US-A-3 927 310**
**US-A-4 130 240**

(73) Titulaire: **SGS-THOMSON MICROELECTRONICS S.A.**
**7, Avenue Galliéni**
**F-94250 Gentilly (FR)**
Titulaire: **MOTOROLA, INC.**
**1303 East Algonquin Road**
**Schaumburg Illinois 60196 (US)**

(72) Inventeur: **Boulian, Eric**
**THOMSON-CSF SCPI - 173, bld Haussmann**
**F-75379 Paris Cedex 08 (FR)**
Inventeur: **Tarayre, Pierre**
**THOMSON-CSF SCPI - 173, bld Haussmann**
**F-75379 Paris Cedex 08 (FR)**
Inventeur: **Tabouriech, Jean-Claude**
**THOMSON-CSF SCPI - 173, bld Haussmann**
**F-75379 Paris Cedex 08 (FR)**

(74) Mandataire: **Rinuy, Santarelli**
**14, avenue de la Grande Armée**
**F-75017 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'pposition (Art. 99(1) Convention sur le brevet européen).

LIBERGRAF, STOCKHOLM 1990

## Description

La présente invention concerne les microprocesseurs, c'est à dire des circuits électriques intégrés capables d'exécuter un grand nombre de fonctions selon des instructions qui leur sont données sous forme de programmes.

L'invention porte sur l'agencement interne des circuits du microprocesseur.

L'état de la technique est tel que décrit dans le préambule de la seule revendication.

Les problèmes qui se posent dans la conception d'un nouveau microprocesseur sont évidemment extrêmement nombreux mais, en restant sur un plan très général, on doit considérer qu'on cherche à faire en sorte que l'utilisateur du microprocesseur ait à sa disposition un certain nombre (par exemple une centaine) de fonctions élémentaires qui, associées dans un programme de travail, permettent au microprocesseur d'exécuter des opérations bien définies dans un contexte donné (commande de machine-outil par exemple). La définition des fonctions élémentaires est une composante importante de la conception d'un microprocesseur dès qu'on s'écarte des fonctions élémentaires évidentes telles que l'addition de nombres, la soustraction, les décalages à gauche ou à droite de registres, les branchements conditionnels, etc. En effet, il faut, pour l'utilisateur, que l'élaboration des programmes soit facile et, pour le fabricant de microprocesseurs, que l'augmentation du nombre de fonctions élémentaires prévues ne se traduise pas par un accroissement exagéré de la surface de la puce de circuit intégré et de son nombre de bornes de sortie vers l'extérieur.

Parmi les fonctions élémentaires prévues, il en est qui ne sont pas évidentes à imaginer car elles ne correspondent pas véritablement à des possibilités supplémentaires d'utilisation du microprocesseur, mais plutôt à des possibilités pour l'utilisateur de mieux maîtriser la phase de mise au point de ses programmes d'application: cette phase de mise au point est en effet délicate et il est très rare que les applications envisagées pour le microprocesseur soient suffisamment simples pour que l'utilisateur n'ait qu'à écrire un programme d'exécution, à l'enregistrer en mémoire et à le faire exécuter par le microprocesseur; au contraire, il faut le plus souvent retoucher de nombreuses fois le programme avant qu'il ne fonctionne correctement.

La présente invention propose donc ici de donner aux microprocesseurs une nouvelle possibilité, utile lors de la phase de mise au point des programmes des microprocesseurs qui incorporent un compteur d'évènements ("timer" en anglais). Un tel compteur d'évènements est souvent prévu sur la même puce de circuit intégré que le coeur du microprocesseur, sa fonction principale étant de compter des intervalles de temps, le plus souvent en nombre de cycles élémentaires d'instructions, pour engendrer des interruptions de programmes après des durées déterminées (exemple d'application: déclencher une temporisation après la frappe d'une touche sur un clavier pour éliminer les risques de rebond).

Selon l'invention, dans un microprocesseur qui comporte un compteur d'évènements et qui possède une borne extérieure de sélection de mode indiquant, lorsqu'elle est activée et que le microprocesseur est en phase de réinitialisation, que le microprocesseur doit se mettre dans un mode choisi parmi plusieurs, un registre de mode sélectionné conservant en mémoire une information sur le mode qui a été sélectionné pendant l'activation de la borne de sélection de mode, l'un des modes possibles étant un mode "non-utilisateur" servant lors de la mise au point de programmes d'application du microprocesseur, on prévoit un circuit logique établissant un ordre d'arrêt du compteur d'évènements lorsqu'on a la combinaison d'états suivante:

— la borne de sélection de mode est activée,
— on n'est pas en phase de réinitialisation,
— et le registre de mode sélectionné indique qu'un mode ou un groupe de modes incluant un "non-utilisateur" a été sélectionné.

Autrement dit, l'invention propose un moyen simple et efficace d'arrêter à partir d'une borne d'accès extérieur du microprocesseur le compteur d'évènements, ce qui présente les intérêts suivants:

— on peut arrêter le compteur d'évènements à un instant quelconque de l'exécution d'un programme, en particulier lorsque l'utilisateur a demandé un "point d'arrêt" (arrêt sur un évènement précis: adresse donnée, éléments extérieurs). Ceci se fait généralement par une broche extérieure (Halt) ou un automate externe. On peut lire, à l'aide d'un programme spécial d'aide à la mise au point, la valeur contenue dans le compteur à l'apparition du point d'arrêt. On aura en particulier l'avantage de ne pas risquer des interruptions dues au compteur lui-même (qui habituellement génère une interruption automatique à chaque passage par zéro de son contenu) pendant l'exécution du programme spécial d'aide à la mise au point;
— on n'a pas à réserver un niveau d'interruption au programme spécial d'aide à la mise au point. En général, pour ne pas être dérangé par une interruption issue du compteur d'évènements lors de l'exécution du programme spécial d'aide à la mise au point, on force une interruption au moment du point d'arrêt afin de masquer toutes les interruptions ultérieures pouvant survenir. Cette méthode est difficilement applicable dans les microprocesseurs où les niveaux d'interruptions sont en nombre très limité (par exemple lorsqu'il y a seulement une à quatre places de mémoire en pile prévues pour conserver les adresses de retour au programme principal en cas d'interruption); il est important de ne pas utiliser inconsidérément un niveau d'interruption pour aller lire un registre interne au microprocesseur et en particulier l'état du compteur d'évènements; l'invention présente donc l'avantage d'un arrêt par l'extérieur n'interférant pas avec les interruptions normales (extérieures ou par programme ou par l'état du compteur d'évènements lui-même) des programmes d'utilisation en cours de mise au point.

— le microprocesseur ne part pas en interruption lorsque l'utilisateur manipule le registre de contrôle du compteur d'évènements avec le programme spécial d'aide à la mise au point. Généralement le compteur délivre un signal de débordement (passage par zéro) qui, s'il est validé par un bit d'un registre de contrôle, provoque une interruption. Si au moment du point d'arrêt, lorsque le signal de débordement est présent et est masqué par le bit du registre de contrôle, l'utilisateur va modifier ce bit dans le registre de contrôle à l'aide du programme spécial d'aide à la mise au point, le microprocesseur part en interruption. La broche d'accès extérieur permet de masquer cette interruption. Généralement c'est le programme d'aide à la mise au point qui interdit la modification de ce bit; cette interdiction par programme peut être gênante lors de la phase de mise au point.

On prévoit que l'ordre d'arrêt du compteur d'évènements est synchronisé sur un instant approprié du cycle d'incrémentation du compteur d'évènements, par exemple sur le premier temps du cycle, afin que le compteur ne soit pas arrêté au milieu d'une phase d'incrémentation, à un instant où son contenu n'aurait pas de signification réelle.

Cependant, cette synchronisation peut se faire non pas par un circuit de synchronisation interne au microprocesseur, mais par l'utilisateur lui-même qui devra appliquer un signal logique à un moment bien défini par rapport aux cycles internes du microprocesseur.

D'autres caractéristiques et avantages de l'invention apparaîtront à la lecture de la description détaillée qui suit et qui est faite en référence au dessin annexé dans lequel:

— la figure unique représente le schéma synoptique de la partie de microprocesseur concernée par l'invention.

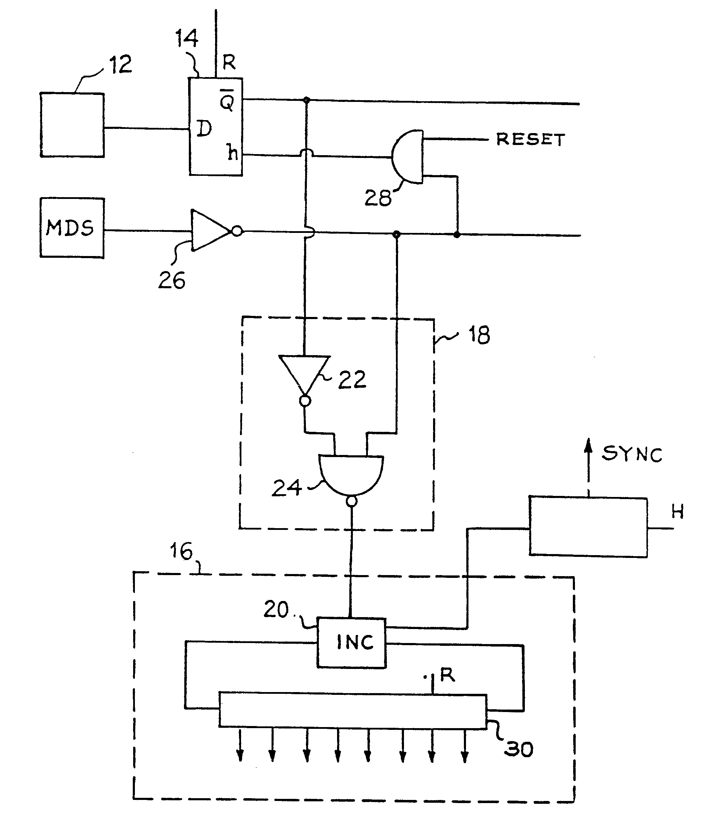

Le microprocesseur comporte un certain nombre de circuits et de bornes d'accès extérieures parmi lesquelles on n'a représenté sur la figure 1 que les éléments suivants:

Une borne extérieure MDS de sélection de mode qui peut être activée (niveau logique 0 appliqué à cette borne), ou désactivée (niveau 1).

Une borne extérieure 12 destinée à recevoir un niveau logique définissant un mode ou un groupe de modes de fonctionnement particulier du microprocesseur lorsque la borne MDS est activée lors d'une phase de réinitialisation du circuit (signal RESET = 1). Ce niveau logique est enregistré dans une bascule de mémorisation 14 dont la sortie, éventuellement en combinaison avec d'autres sorties issues d'autres bornes extérieures, commande le microprocesseur pour le mettre dans un état correspondant à un mode sélectionné.

Les modes de fonctionnement possibles du microprocesseur, ici au nombre de quatre, comprennent un mode normal, un mode non-utilisateur, et par exemple un mode auto-test et un mode de test de contenu de mémoire morte.

Dans le mode non-utilisateur on déconnecte le coeur du microprocesseur de ses organes périphériques et on cherche notamment à lire, au moyen de programmes d'aide à la mise au point qui font fonctionner le coeur du microprocesseur, l'état de certains registres, bus d'adresses ou de données etc. tels que ces états ont pu apparaître au cours d'un programme exécuté en mode normal.

C'est dans ce mode non-utilisateur qu'on veut pouvoir, selon l'invention, arrêter un compteur d'évènements 16 du microprocesseur, à un moment où on est effectivement passé en mode non-utilisateur, c'est à dire que la phase de réinitialisation est terminée (signal RESET revenu à zéro).

Ici, la borne extérieure 12 entraîne, si elle est activée pendant l'activation de la borne MDS et pendant la phase de réinitialisation du circuit, le passage du microprocesseur dans le mode non-utilisateur ou le mode test de mémoire morte (le choix entre ces deux modes se faisant par une autre borne extérieure non représentée et couplée à un registre de mémorisation similaire à la bascule 14). Si pendant l'activation de la borne MDS durant la phase de réinitialisation du circuit, la borne 12 n'était pas activée (sortie de la bascule restant à l'état logique haut), l'un des deux autres modes de fonctionnement du microprocesseur serait établi.

Le niveau logique de sortie de la bascule 14 (niveau bas pour le mode non-utilisateur), le niveau logique présent sur la borne MDS (niveau bas si elle est activée pour la sélection d'un mode de fonctionnement), et le signal RESET de réinitialisation sont utilisés dans un circuit logique très simple qui fournit un ordre d'arrêt à l'incrémenteur 20 du compteur d'évènements 16 lorsque, le signal de sortie de la bascule 14 étant celui qui correspond au mode non-utilisateur et le signal RESET étant revenu à zéro (phase de réinitialisation terminée), la borne MDS est activée, c'est à dire prend ici un niveau logique bas.

A cet effet, le circuit logique 18 comprend simplement un inverseur 22 recevant la sortie de la bascule 14, une porte NAND 24 recevant la sortie de cet inverseur ainsi que le signal, complémenté par un inverseur 26, issu de la borne MDS. La sortie de la porte NAND arrête, lorsqu'elle passe à zéro, l'incrémenteur 20 du compteur d'évènements 16.

De plus, une porte ET 28, recevant d'une part le signal de réinitialisation RESET et d'autre part la sortie de l'inverseur 26, est connectée à l'entrée d'horloge de la bascule 14 et permet de faire basculer celle-ci pendant la phase de réinitialisation et d'empêcher son basculement en dehors de cette phase. Pendant la phase de réinitialisation, le contenu du compteur 16 est remis à zéro.

Il est à noter que dans ces conditions, l'arrêt du compteur d'évènements se produit dès l'activation de la borne MDS (passage au niveau bas) lorsqu'on est dans le mode non-utilisateur ou le mode de test de mémoire. Si on voulait qu'il se produise uniquement dans le mode non-utilisateur, il faudrait prévoir que le circuit logique reçoive aussi un signal issu de la bascule non représentée définissant le choix entre le mode non-utilisateur et le mode test de contenu de mémoire morte. Dans l'application prévue, il n'est pas gênant que l'arrêt se produise aussi en mode de test de mémoire et cela simplifie le circuit logique 18 si on prévoit un arrêt dans les deux modes correspondant à l'activation de la borne 12.

On a encore représenté sur la figure, un circuit d'horloge H couplé à l'incrémenteur, pour signifier que l'incrémentation s'effectue d'une manière synchronisée par l'horloge interne ou externe du microprocesseur. Si on veut que l'arrêt du compteur d'évènements se produise durant une période de temps pendant laquelle le contenu des registres 30 du compteur est stable et représentatif du compte d'évènements effectué, il faut que l'utilisateur fasse en sorte de faire passer le signal MDS au niveau bas (activation) à un instant bien déterminé du cycle d'incrémentation du compteur 16, par exemple pendant le premier temps de chaque cycle d'incrémentation. On pourra prévoir par exemple que l'activation de la borne MDS devra se produire dans un délai maximum (par exemple 150 nanosecondes) après l'apparition d'un signal périodique de synchronisation générale du microprocesseur (signal SYNC établi par les circuits d'horloge H).

## Revendication

Microprocesseur comportant un compteur d'évènements incorporé (16) et possédant une borne de sélection de mode (MDS) indiquant, lorsqu'elle est activée, que le microprocesseur doit se mettre dans un mode choisi parmi plusieurs, un registre de mode sélectionné (14) conservant en mémoire une information sur le mode qui a été sélectionné pendant l'activation de la borne de sélection de mode, l'un des modes possibles étant un mode non-utilisateur servant lors de la mise au point de programmes d'application du microprocesseur, caractérisé en ce qu'il comporte un circuit logique (18) établissant un ordre d'arrêt du compteur d'évènements lorsqu'on a la combinaison d'états suivante:

— on n'est pas en phase de réinitialisation,
— la borne de sélection de mode est activée,
— le registre de sélection de mode indique qu'un mode ou un groupe de modes incluant un mode non-utilisateur a été sélectionné.

## Claim

A microprocessor comprising a built-in event counter (16) and having a mode selection terminal (MDS) indicating, when it is activated, that the microprocessor should be put in one mode selected from several, and a register of the selected mode (14) retaining in its memory information about the mode which was selected during activation of the mode selection terminal, one of the possible modes being a non-user mode which is employed during the checking of application programs of the microprocessor, characterized in that it comprises a logic circuit (18) which establishes a command for stopping the event counter when the following combination of states exists:

— the microprocessor is not in the reinitialization phase,
— the mode selection terminal is activated,
— the mode selection register indicates that a mode or a group of modes, including a non-user mode, has been selected.

## Patentanspruch

Mikroprozessor, der einen eingebauten Ereigniszähler (16) umfaßt und einen Moden-Selektionsanschluß (MDS), der dann, wenn er aktiviert ist, anzeigt, daß der Mikroprozessor in einen aus mehreren Moden ausgewählten Modus übergehen soll, sowie ein Register (14) für den ausgewählten Modus umfaßt, das eine Information bezüglich des Modus speichert, der während der Aktivierung des Moden-Selektionsanschlusses ausgewählt worden ist, wobei einer der möglichen Moden ein Nichtbenutzer-Modus ist, der während des Austestens von Anwendungsprogrammen des Mikroprozessors Verwendung findet, *dadurch gekennzeichnet,* daß der Mikroprozessor eine Logikschaltung (18) umfaßt, die einen Haltbefehl für den Ereigniszähler erzeugt, wenn folgende Zustandskombination vorliegt:

— Man befindet sich nicht in einer Reinitialisierungsphase,
— der Moden-Selektionsanschluß ist aktiviert,
— das Register für den ausgewählten Modus zeigt an, daß ein Modus oder eine Gruppe von Moden einschließlich eines Nichtbenutzer-Modus ausgewählt worden ist.